# EUROPEAN PATENT APPLICATION

(11) **EP 4 789 976 A1**
(43) Date of publication of application: **12.08.2026**
(21) Application number: 23951058.9
(22) Date of filing: 07.09.2023
(51) Int. Cl.: B65D 19/32, B65D 19/34

(54) **ASSEMBLABLE, COMPACTABLE, REUSEABLE AND RECYCLABLE CARDBOARD PALLET FOR TRANSPORTING AND STORING MERCHANDISE**

(71) Applicant: Stanley Calvo, Roberto Tomás, Cerrillos, Santiago (CL)
(72) Inventor: Stanley Calvo, Roberto Tomás, Cerrillos, Santiago (CL)
(74) Representative: Bardehle Pagenberg Partnerschaft mbB Patentanwälte Rechtsanwälte
(86) International application number: PCT/CL2023/050082
(87) International publication number: WO 2025/050227

(57) **Abstract**

A cardboard pallet that can be assembled without additional elements, formed only by a grid of first and second cardboard plates arranged vertically and interconnected by slots spaced such that the pallet can be compacted to reduce its volume. The plates comprise a plurality of cuts and folds that generate a plurality of self-fastening flaps, which, by folding, interlock with the adjacent parallel plate, generating a rigid structure. The plates, together with the self-fastening flaps, provide stability and sturdiness to the pallet. The self-fastening flaps can be disconnected to compact the pallet horizontally and reduce its size, which facilitates the transport and storage thereof when not in use. Method for assembling and compacting the pallet. And self-fastening flap system to rigidly assembling the pallet and allow its compaction.

## Description

### TECHNICAL FIELD

This invention has been developed in the field of packaging elements, and refers to an assemblable, compactable, reuseable and recyclable cardboard pallet for transporting and storing merchandise.

### PREVIOUS ART

Pallets or portable platforms are widely used elements for transporting and storing a wide variety of goods and merchandise. In general, manufacturing is conducted with wood and/or metal, although lighter and cheaper alternatives in materials such as cardboard and plastic are currently being developed.

However, one of the main drawbacks of pallets is their bulkiness, so the efficient transport and storage thereof becomes difficult when not in use. Some pallets are manufactured with a rigid and final shape, making it difficult or impossible to reduce their size. Another drawback arises from the complex configuration of assemblable pallets, which require additional elements such as glue or detachable fasteners, which makes it difficult to assemble and/or disassemble them on a regular basis.

US2010/0175595 A1 (WGP NV, published on 7/15/2010) discloses a cardboard pallet formed of parallel longitudinal elements, perpendicular cross-sectional elements and vertical support elements placed at regular distances, where the support elements, the cross-sectional elements and the upper longitudinal elements are positioned vertically to the lower longitudinal elements, where at least some of the aforementioned elements of the pallet are solid cardboard, i.e., compressed or glued paper. Method for manufacturing the pallet and section in the pallet to be used.

GB2419580A (ROBIN ANTHONY POOL, published on May 9, 2006) discloses a pallet manufactured of corrugated cardboard that can be die-cut from a single sheet of corrugated cardboard. The pallet consists of two identical load supports on each side, another central load support(s) and a double-thickness cover. The carriers can't move because of tabs that keep them in place when mounted. The load supports may have openings to allow for the passage of strapping heads. A double fold at the point of highest strap load prevents the pallet material from tearing. The ground clearance of the pallet is variable. In principle, the pallet can have any length along the load supports that the board manufacturing equipment can provide.

To solve the disadvantages mentioned above, this invention proposes a cardboard or plastic pallet for transporting and storing merchandise, which is reuseable, recyclable, assemblable, compactable and which, because of its easy assembly method and simple configuration, allows to reduce its size and volume for the storage and transport thereof when not in use, while providing strength, stability and sturdiness to the assembled structure during use.

### SUMMARY OF THE INVENTION

An assemblable cardboard pallet without additional elements, formed only by an intersection of first and second cardboard plates arranged vertically and interconnected by slots spaced such that the pallet can be compacted to reduce its volume. The plates comprise a plurality of cuts and folds that generate a plurality of self-fastening flaps, which, by folding, interlock with the adjacent parallel plate, generating a rigid structure. The plates, together with the self-fastening flaps, provide stability and sturdiness to the pallet. The self-fastening flaps can be disconnected to compact the pallet horizontally and reduce its size, which facilitates the transport and storage thereof when not in use. Method for assembling and compacting the pallet. And self-fastening flap system to rigidly assembling the pallet and allow its compaction.

### DESCRIPTION OF THE FIGURES

Figure 1 shows a perspective view of the pallet assembled with the self-fastening flaps folded and locked.
Figure 2 shows a view of the compacted pallet with the self-fastening flaps released from the fasteners and aligned vertically with the plates.
Figure 3 shows the front plane of a first plate (100) in detail.
Figure 4 shows the front plane of a second plate (200) in detail.
Figure 5 shows the way the self-fastening flaps are folded in detail.
Figure 6 shows the folded and locked self-fastening flaps in detail.

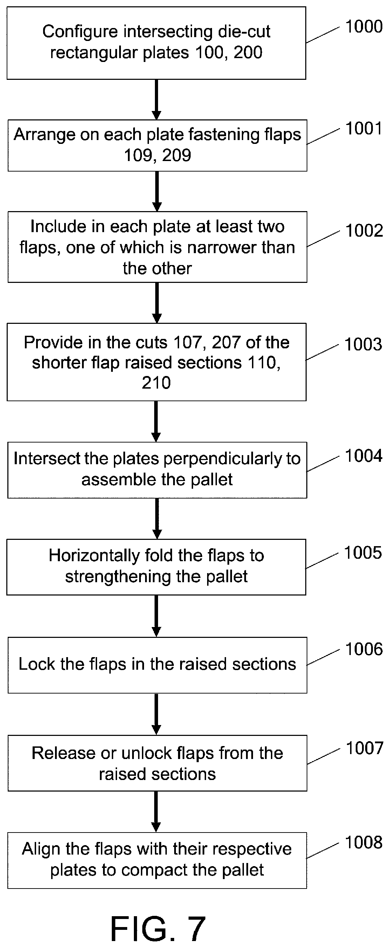

Figure 7 shows a diagram illustrating the steps of the method for assembling and compacting the pallet.

### DETAILED DESCRIPTION OF THE INVENTION

This invention consists of a pallet (10), preferably cardboard or plastic, for transporting and storing merchandise, formed by first rectangular plates (100) die-cut and second rectangular plates (200) die-cut and arranged intersecting each other.

Each first plate (100) comprises side edges (101), an upper edge (102), a lower edge (103), a series of slots (104) arranged vertically from the lower edge (103), which are grouped in pairs defining smaller spacing zones (105) and larger spacing zones (106). Included in each larger spacing zone (106) are cuts (107) arranged vertically from the upper edge (102) of each first plate (100) and horizontal folds (108), said cuts (107) and folds (108) defining the contour of a respective removable self-fastening rectangular flap (109), where the length of each self-fastening flap (109) is less than the length of each larger spacing zone (106) and the width of each self-fastening flap (109) is equal to or greater than the width of each smaller spacing zone (105).

Each first plate (100) comprises at least two self-fastening flaps (109), one of which is narrower than the other and whose cuts (107) include raised sections (110) defining a stepped or triangular protruding profile.

Each second plate (200) comprises side edges (201), an upper edge (202), a lower edge (203), a series of slots (204) arranged vertically from the upper edge (202), which are grouped in pairs defining smaller spacing zones (205) similar to the smaller spacing zones (105), and larger spacing zones (206) similar to the larger spacing zones (106). In each larger spacing zone (206) are included cuts (207) arranged vertically from the upper edge (202) of each second plate (200) and horizontal folds (208), said cuts (207) and folds (208) defining the contour of a respective rectangular detachable self-fastening flap (209), where the length of each self-fastening flap (209) is less than the length of each larger spacing zone (206) and the width of each flap self-fastening (209) is equal to or greater than the width of each zone where the spacing is smaller (205).

Each second plate (200) comprises at least two self-fastening flaps (209), one of which is narrower than the other and whose cuts (207) include raised sections (210) that define a stepped or triangular protruding profile.

The structure of the pallet (10) is formed by perpendicularly intersecting the first plates (100) with the second plates (200) and fitting the respective slots (104) into the respective slots (204), so as to form a quadrangular plan structure, wherein when the first and second intersecting plates (100, 200) are inverted, the upper edges (102, 202) form a horizontal support plane (300) for the merchandise and the lower edges (103, 203) form a horizontal plane of support (400) of the pallet (10).

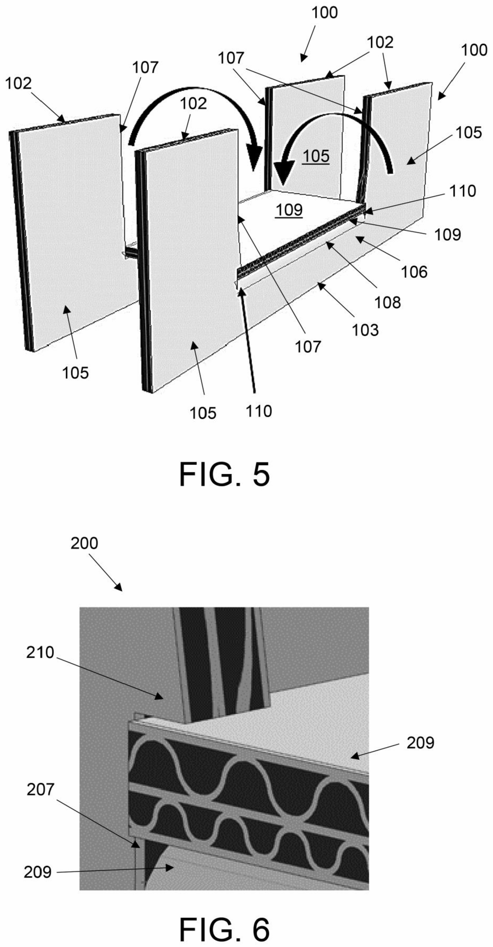

Strengthening of the first and second intersecting plates (100, 200) of the pallet (10) is achieved by horizontally folding the self-fastening flaps (109, 209), which project over each other in pairs onto the nearest first or second plates (100, 200), where the free end of the self-fastening flap (109, 209) locks with the respective raised sections (110, 210) to secure each self-fastening flap (109, 209) in the assembled pallet position (10). Likewise, the grid of first and second plates (100, 200) is held in place by the friction of the material itself (figure 5).

When the self-fastening flaps (109, 209) are folded, a lower profile of the assembled pallet (10) is formed, defined by recessed intermediate zones (500) and protruding pillars (600), said recessed zones (500) being coplanar with each other and the lower profiles of said pillars (600) being coplanar with each other, so that said recessed zones (500) define channels aligned to adequately receive the prongs of a pallet lifting equipment.

This particular forming of first and second plates (100, 200) with self-fastening flaps (109, 209) and raised sections (110, 210) allows said self-fastening flaps (109, 209) to be folded and unfolded, easily fixed and unlocked by a user to fix or release the rigidity of the pallet (10), making it reuseable and versatile in use.

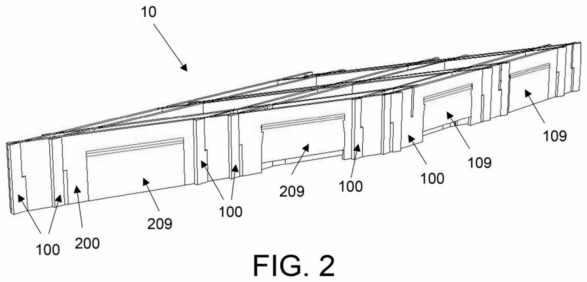

The foldable and deployable self-fastening flap system (109, 209) allows the pallet volume (10) to be reduced while the first and second plates (100, 200) are intersected and facilitate the storage and transport thereof, for which the self-fastening flaps (109, 209) are released from the raised sections (110, 210) and aligned with their respective first or second plate (100, 200), furthermore between each first or second parallel plate (100, 200) each smaller spacing zone (105, 205) defines a distance sufficient to compact the pallet (10) and reduce its volume with a simple scissor-like movement (figure 2).

In a preferential and nonlimiting embodiment of this invention, the assemblable, compactable, reuseable and recyclable pallet (10), for transporting and storing merchandise, is preferably manufactured of corrugated cardboard, is formed by a grid of at least six first plates (100) and at least six second plates (200), where each plate (100, 200) comprises at least two self-fastening flaps (109, 209), and the dimensions thereof may range from 1,000 x 800 mm to 1,500 x 1,000 mm, being preferably 1,200 x 1,000 mm.

Likewise, the present invention contemplates different sizes of the pallet (10), and the incorporation of more plates (100, 200) if necessary, to guarantee its functionality, depending on the weight and dimensions of what is required to be supported.

The present invention also contemplates a method for assembling and compacting a pallet (10), preferably cardboard or plastic, for transporting and storing merchandise, comprising the steps of:
configuring (1000) first stamped rectangular plates (100) and second stamped rectangular plates (200), for intersecting, with side edges (101, 201), upper edge (102, 202), lower edge (103, 203), with a series of slots (104) arranged vertically from the lower edge (103) of the first plates (100), and with a series of slots (204) arranged vertically from the upper edge (202) of the second plates (200), wherein said series of slots (104, 204) are grouped in pairs defining smaller spacing zones (105, 205) and larger spacing zones (106, 206);
arranging (1001) on each first and second plates (100, 200) cuts (107, 207) in each larger spacing zone (106, 206), arranged vertically from the upper edge (102, 202) of each first and second plates (100, 200) in combination with horizontal folds (108, 208), said cuts (107, 207) and folds (108, 208) defining the contour of a respective self-fastening rectangular flap (109, 209), wherein the length of each self-fastening flap (109, 209) is less than the length of each larger spacing zone (106, 206) and the width of each self-fastening flap (109, 209) is equal to or greater than the width of each smaller spacing zone (105, 205);
including (1002) on each first and second plates (100, 200) at least two self-fastening flaps (109, 209), one of which is narrower than the other;
providing (1003) in the cuts (107, 207) of the shorter self-fastening flap (109, 209) raised sections (110, 210) that define a stepped or triangular protruding profile;
perpendicularly intersecting (1004) the first and second plates (100, 200) to assemble the pallet (10), by fitting of the respective slots (104) of the first plates (100) with the respective slots (204) of the second plates (200) forming a quadrangular plan structure, where by inverting the first and second intersected plates (100, 200), the upper edges (102, 202) form a horizontal support plane support (300) for the merchandise and the lower edges (103, 203) form a horizontal plane of support (400) of the pallet (10);
horizontally folding (1005) the self-fastening flaps (109, 209) to strengthen the assembled pallet (10), which project one over the other in pairs onto the nearest first or second plate (100, 200);
locking (1006) the free end of each upper self-fastening flap (109, 209) with the respective raised sections (110, 210) to secure each self-fastening flap (109, 209) in the assembled pallet (10) position, whereby configuring a lower profile of the pallet (10) defined by recessed intermediate zones (500) and protruding pillars (600), said recessed zones (500) being coplanar with each other and the lower profiles of said pillars (600) being coplanar with each other, whereby said recessed zones (500) define aligned channels;
releasing or unfastening (1007) the self-fastening flaps (109, 209) from the respective raised sections (110, 210); and,
aligning (1008) the self-fastening flaps (109, 209) with their respective first or second plate (100, 200), wherein between each first or second parallel plate (100, 200) each smaller spacing zone (105, 205) defines a sufficient distance to compact the pallet (10) with a simple scissor-like movement.

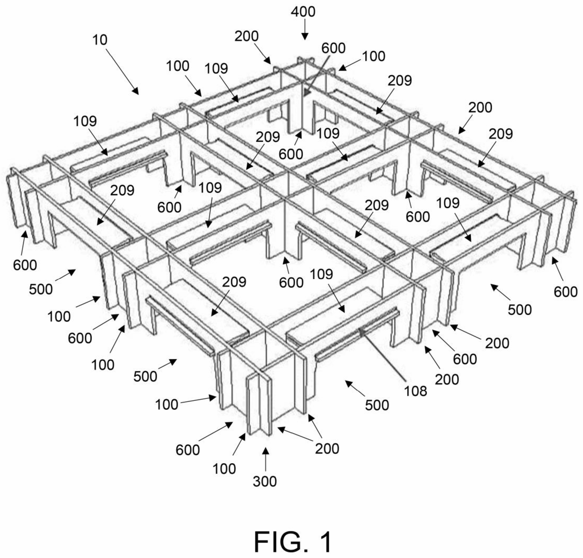

Figure 1 shows a general diagram of the assembled pallet (10), with first and second intersected plates (100, 200), interconnected by slots (104, 204) (not shown in said figure), illustrating the spacing between them, where the self-fastening flaps (109, 209) are folded and locked.

Figure 2 shows a general schematic of the pallet (10) compacted when the self-fastening flaps (109, 209) are released and unlocked.

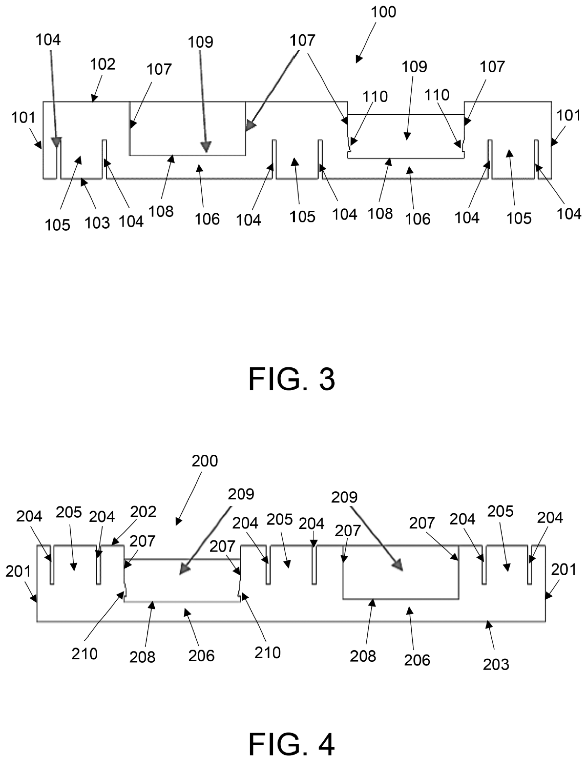

Figures 3 and 4 show the features of the first and second plates (100, 200).

Figures 5 and 6 show the way in which the self-fastening flaps are folded and locked in detail (109, 209).

The present invention is also directed to a detachable self-fastening flap system (109, 209) to rigidly assembling a pallet (10), preferably cardboard or plastic, for transporting and storing merchandise, and allowing its compaction, including:
rectangular self-fastening flaps (109, 209), arranged on first and second plates (100, 200), wherein each first plate (100) comprises at least two self-fastening flaps (109) and each second plate (200) comprises at least two self-fastening flaps (209), where on each first and second plate one self-fastening flap is narrower than the other and each first and second plate (100, 200) includes cuts (107, 207) with raised sections (110, 210) defining a stepped or triangular protruding profile;
wherein the self-fastening flaps (109, 209) fold horizontally projecting over each other in pairs onto the nearest first or second plate (100, 200), where the free end of each upper self-fastening flap (109, 209) is easily locked with the respective raised sections (110, 210) to secure each clamping flap (109, 209) in the assembled pallet position (10) and to strengthen the entire assembled structure;
wherein, as the self-fastening flaps (109, 209) are folded, the lower profile of the assembled pallet (10) is formed, defined by recessed intermediate zones (500) and protruding pillars (600); and,
wherein the self-fastening flaps (109, 209) are easily unlocked to release the sturdiness of the pallet (10) not in use and aligned with their respective first or second plate (100, 200) to reduce the volume of the pallet (10) and facilitate the storage and transport thereof.

**LIST OF NUMERICAL REFERENCES ASSOCIATED WITH THE FIGURES**

| | | | |
|---|---|---|---|
| 10 | pallet | 110 | raised section |
| 100 | first rectangular plate | 200 | second rectangular plate |
| 101 | side edge | 201 | side edge |
| 102 | top edge | 202 | top edge |
| 103 | bottom edge | 203 | bottom edge |
| 104 | slot | 204 | slot |
| 105 | smaller spacing zone | 205 | smaller spacing zone |
| 106 | larger spacing zone | 206 | larger spacing zone |
| 107 | cutting | 207 | cutting |
| 108 | fold | 208 | fold |
| 109 | self-fastening flap | 209 | self-fastening flap |
| 210 | raised section | 1004 | step of perpendicularly intersecting the first and second plates to assemble the pallet |
| 300 | horizontal support plane | | |
| 400 | horizontal plane of support | | |
| 500 | recessed intermediate section | | |
| 600 | pillar | 1005 | step of horizontally folding the self-fastening flaps to strengthen the pallet |
| 1000 | step of configuring intersecting die-cut rectangular plates | | |
| 1001 | step of arranging self-fastening flaps on each plate | 1006 | step of locking the self-fastening flaps in the raised sections |
| 1002 | step of including at least two self-fastening flaps on each plate, one of which is narrower than the other | | |
| | | 1007 | step of releasing or unfastening the self-fastening flaps from the raised sections |
| 1003 | step of providing in the cuts 107, 207 of the shorter self-fastening flap raised sections | 1008 | step of aligning the self-fastening flaps with their respective first or second plate to compact the pallet |

## Claims

1. Assemblable, compactable, reuseable and recyclable pallet (10) for transporting and storing merchandise, wherein it is formed of a combination of first and second rectangular plates (100, 200) die-cut and arranged intersecting each other, where:
each first plate (100) comprises a series of slots (104) arranged vertically from a lower edge (103) of said first layer (100), and each second plate (200) comprises a series of slots (204) arranged vertically from an upper edge (202) of said second plate (200), said slots (104, 204) being grouped into pairs defining smaller spacing zones (105, 205) and larger spacing zones (106, 206);
each first and second plate (100, 200) further comprises in each larger spacing zone (106, 206) vertically arranged cuts (107, 207) from the upper edge (102, 202) of each first and second plates (100, 200) and horizontal folds (108, 208), where said cuts (107, 207) and folds (108, 208) define the contour of a respective detachable self-fastening rectangular flap (109, 209), the length of which is less than the length of each larger spacing zone (106, 206) and the width of which is equal to or greater than the width of each smaller spacing zone (105, 205);
each first and second plates (100, 200) comprises at least two self-fastening flaps (109, 209), one of which is narrower than the other and which cuts (107, 207) include raised sections (110, 210) that define a protruding profile; and
the self-fastening flaps (109, 209) fold horizontally projecting one over the other in pairs onto the nearest first or second plate (100, 200), where the free end of each upper self-fastening flap (109, 209) locks with the respective raised sections (110, 210) securing each self-fastening flap (109, 209) in the assembled pallet position (10) and together forming a rigid structure.

2. The pallet (10) according to claim 1, wherein the grid of first and second plates (100, 200) is held in place by the friction of the material itself.

3. The pallet (10) according to claim 1, wherein the folded self-fastening flaps (109, 209) form the bottom profile of the assembled pallet (10), defined by recessed intermediate zones (500) and protruding pillars (600), said recessed zones (500) being coplanar with each other and the lower profiles of said pillars (600) being coplanar with each other, whereby said recessed zones (500) define aligned channels.

4. The pallet (10) according to claim 1, wherein the protruding profile of the raised sections (110, 210) is stepped.

5. The pallet (10) according to claim 1, wherein the protruding profile of the raised sections (110, 210) is triangular.

6. The pallet (10) according to any of the preceding claims, wherein the self-fastening flaps (109, 209) can be released from the raised sections (110, 210) and aligned with their respective first or second plate (100, 200), to compact the pallet (10) while the first and second plates (100, 200) remain intersected.

7. The pallet (10) according to claim 6, wherein between each first or second parallel plate (100, 200) each smaller spacing zone (105, 205) defines a sufficient distance to compact the pallet (10) and reduce its volume with a simple scissor-type movement.

8. The pallet (10) according to any of the preceding claims, wherein it is made of cardboard material.

9. The pallet (10) according to any of claims 1-7, wherein it is made of plastic material.

10. The pallet (10) according to any of the preceding claims, wherein it is preferably formed by a truss of at least six first plates (100) and at least six second plates (200), wherein each first and second plates (100, 200) comprise at least two self-fastening flaps (109, 209).

11. The pallet (10) according to any of the preceding claims, wherein the dimensions of the assembled pallet (10) vary in a range from 1,000 x 800 mm to 1,500 x 1,000 mm.

12. The pallet (10) according to claim 11, wherein the dimensions are preferably 1,200 x 1,000 mm.

13. Method for assembling and compacting a pallet (10), for transporting and storing merchandise, wherein it comprises the steps of:
configuring (1000) first and second stamped rectangular plates (100, 200), intersecting, each first plate (100) with a series of slots (104) arranged vertically from a lower edge (103) of said first plate (100), and each second plate (200) with a series of slots (204) arranged vertically from an upper edge (202) of said second plate (200), wherein said series of slots (104, 204) are grouped in pairs defining smaller spacing zones (105, 205) and larger spacing zones (106, 206);
arranging (1001) on each first and second plates (100, 200) cuts (107, 207) in each larger spacing zone (106, 206), arranged vertically from the upper edge (102, 202) of each first and second plates (100, 200) in combination with horizontal folds (108, 208), said cuts (107, 207) and folds (108, 208) defining the contour of a respective self-fastening rectangular flap (109, 209);
including (1002) on each first and second plates (100, 200) at least two self-fastening flaps (109, 209), one of which is narrower than the other;
providing (1003) in the cuts (107, 207) of each self-fastening flap (109, 209) shorter raised sections (110, 210) that define a protruding profile;
perpendicularly intersecting (1004) the first and second plates (100, 200) to assemble the pallet (10), by fitting of the respective slots (104) of the first plate (100) with the respective slots (204) of the second plate (200) forming a quadrangular plan structure, where by inverting the first and second intersected plates (100, 200), the upper edges (102, 202) form a horizontal support plane (300) for the merchandise and the lower edges (103, 203) form a horizontal plane of support (400) of the pallet (10);
horizontally folding (1005) the self-fastening flaps (109, 209) to strengthen the assembled pallet (10), which project one over the other in pairs onto the nearest first or second plate (100, 200); and
fastening (1006) the free end of each upper self-fastening flap (109, 209) with the respective raised sections (110, 210) to secure each self-fastening flap (109, 209) in the assembled pallet (10) position, whereby configuring a lower profile of the pallet (10) defined by recessed intermediate zones (500) and protruding pillars (600), said recessed zones (500) being coplanar with each other and the lower profiles of said pillars (600) being coplanar with each other, so that said recessed zones (500) define aligned channels.

14. The method according to claim 13, wherein it comprises releasing or unfastening (1007) the self-fastening flaps (109, 209) from the respective raised sections (110, 210).

15. The method according to claim 13, wherein it comprises aligning (1008) the self-fastening flaps (109, 209) with their respective first or second plate (100, 200), where in between each first or second parallel plate (100, 200) each smaller spacing zone (105, 205) defines a sufficient distance to compact the pallet (10) with a simple scissor-like movement.

16. The method according to claim 13, wherein it comprises arranging each self-fastening flap (109, 209) with a length less than the length of each larger spacing zone (106, 206) and with a width equal to or greater than the width of each smaller spacing zone (105, 205).

17. The method according to claim 13, wherein it comprises forming the protruding profile of the raised sections (110, 210) in a stepped manner.

18. The method according to claim 13, wherein it comprises forming the protruding profile of the raised sections (110, 210) in a triangular manner.

19. The method according to any of claims 13-18, wherein it comprises manufacturing the pallet (10) of cardboard material.

20. The method according to any of claims 13-18, wherein it comprises manufacturing the pallet (10) of plastic material.

21. Detachable self-fastening flap system (109, 209) to rigidly assembling a pallet (10) for transporting and storing merchandise, and allowing its compaction, wherein it includes:
rectangular self-fastening flaps (109, 209), arranged on first and second plates (100, 200), wherein each first plate (100) comprises at least two self-fastening flaps (109) and each second plate (200) comprises at least two self-fastening flaps (209), where on each first and second plate (100, 200) one self-fastening flap is narrower than the other and each first and second plate (100, 200) includes cuts (107, 207) with raised sections (110, 210) that define a prominent profile; and,
wherein the self-fastening flaps (109, 209) fold horizontally projecting over each other in pairs onto the nearest first or second plate (100, 200), where the free end of each upper self-fastening flap (109, 209) is easily locked with the respective raised sections (110, 210) to secure each self-fastening flap (109, 209) in the assembled pallet position (10) and strengthening the entire assembled structure.

22. The system according to claim 21, wherein the self-fastening flaps (109, 209) are easily unlocked to release the sturdiness of the pallet (10) not in use and are aligned with their respective first or second plate (100, 200) to reduce the volume of the pallet (10) and facilitate the storage and transport thereof.

23. The system according to claim 21, wherein the folded self-fastening flaps (109, 209) form the lower profile of the assembled pallet (10), defined by recessed intermediate zones (500) and protruding pillars (600).

24. The system according to any of claims 21-23, wherein the protruding profile of the raised sections (110, 210) is stepped.

25. The system according to any of claims 21-23, wherein the protruding profile of the raised sections (110, 210) is triangular.
